# EUROPÄISCHE PATENTSCHRIFT

(11) **EP 3 805 558 B1**
(45) Veröffentlichungstag und Bekanntmachung des Hinweises auf die Patenterteilung: **15.06.2022**
(21) Anmeldenummer: 19202118.6
(22) Anmeldetag: 09.10.2019
(51) Int. Cl.: F03D 9/32

(54) **WINDKRAFTANLAGE FÜR FAHRZEUGE**
WIND TURBINE FOR VEHICLES
EOLIENNE POUR VEHICULES

(43) Veröffentlichungstag der Anmeldung: 14.04.2021
(73) Patentinhaber: Peters, Andreas, 32423 Minden (DE)
(72) Erfinder: Peters, Andreas, 32423 Minden (DE)
(74) Vertreter: von Pinkowski, Elisabeth

(56) Entgegenhaltungen:
- CN-A- 109 398 116
- CN-A- 110 017 248
- US-A1- 2017 114 776

## Beschreibung

### Windkraftanlage für Fahrzeuge

Die Erfindung betrifft eine Windkraftanlage für Fahrzeuge. Bekannt sind eine Vielzahl von Windkraftanlagen. Ebenfalls bekannt sind diverse Windkraftanlagen für Fahrzeuge.

In der DE 202012012303U1 werden Windkraftanlagen für LKWs und Nutzfahrzeuge beschrieben, bei denen mehrere Rotorblätter in einem größeren Gehäuse oberhalb der Schlafkabine eines LKWs oder auf dem LKW-Führerhausdach eingebaut wurden. Savonius-Rotoren werden in der DE202010004972U1 beschrieben, welche zur Energiegewinnung den Fahrtwind bei Fahrzeugen nutzen.

Die EP1108890A2 beschreibt die Energiegewinnung und Stromerzeugung mittels der Luftströmungen unter einem Fahrzeug.

Weitere Beispiele aus dem Stand der Technik finden sich in den Dokumenten CN 110 017 248 A, CN 109 398 116 A und US 2017/114776 A1.

Nachteile der bekannten Windkraftanlagen sind die meist komplizierten Bauweisen, welche es Verbraucher schwer machen, mit einfachen Mitteln eine Windkraftanlage in kleinem Maßstab ans Fahrzeug anzubringen und den Wind bzw. die Windkraft als Energielieferant zu nutzen. Darüber hinaus sind die bekannten Windkraftanlagen für Fahrzeuge sehr teuer.

Es stellte sich daher die Aufgabe, eine (Klein-) Windkraftanlage für Fahrzeuge zur Verfügung zu stellen, die sowohl preisgünstig als auch einfach ans Fahrzeug anzubringen ist, d.h. vom Verbraucher selbst angebracht werden kann.

Die Aufgabe konnte mittels der Merkmale von Patentanspruch 1 gelöst werden.

Dabei besteht die Windkraftanlage für Fahrzeuge aus einem Bausatz, wobei dieser eine Rotoreinheit, eine Steuerungseinheit und eine Halterungseinheit beinhaltet. Die Rotoreinheit und die Steuerungseinheit werden zusammengesteckt und mittels einer Halterung am Fahrzeug befestigt.

Die Rotoreinheit ist mit der Steuerungseinheit über eine Trapezgewindestange verbunden. Die Steuerungseinheit besitzt ein Gehäuse, vorzugsweise aus Aluminium, welches von einem Designgehäuse umschlossen ist. Der Generator kann sich innerhalb oder außerhalb der Steuerungseinheit befinden.

Die Rotoreinheit kann über die Trapezgewindestange mittels einer Handkurbel oder eines Hubknaufs über eine Führungsbuchse oder elektrisch aus- und eingefahren werden. Die Hub- und Drehbewegung durch die Trapezgewindestange wird dabei mittels eines Wälzlagers gestützt. Ist die Rotoreinheit eingefahren, so so ist das Gehäuse mit einem Magnetdeckel verschlossen.

Die Rotoreinheit kann mittels eines Hebels arretiert werden. Die erfindungsgemäße Windkraftanlage zur Erzeugung von elektrischer Energie durch Windkraft wird beispielsweise am Heck des Fahrzeugs oder auf dem Dach befestigt und an das Bordnetz angeschlossen.

Die Rotorblätter, welche aus Metall oder Kunststoff bestehen können, sowie die mechanischen und elektrischen Komponenten befinden sich sicher gegen Witterungsverhältnisse in einem stabilen Gehäuse, vorzugsweise einem Rundgehäuse, insbesondere aus einem Metall oder Kunststoff, besonders bevorzugt aus Aluminium, welches von einem Designgehäuse umschlossen wird, welches aus verschiedenen Materialien, beispielsweise aus einem Metall oder Kunststoff, bestehen kann.

Mit einem dafür vorgesehenen Hebel bzw. einer Handkurbel oder über einen elektrischen Antrieb lassen sich die Rotorblätter mittels einer selbsthemmenden Trapezgewindestange in Kombination mit einem Schneckenantrieb durch die Drehbewegung der Kurbel bzw. mit dem Hebel bei Bedarf hochfahren und auch wieder herunterfahren. Ebenso kann das Hoch- und Herunterfahren mittels einer entsprechenden Elektrik durchgeführt werden. Die Trapezgewindestange kann in besonderen Ausführungsformen der Erfindung auch verlängert oder wie eine Teleskopstange aus- und eingefahren werden.

Eine sich im Gehäuse, vorzugsweise aus einer Kupferlegierung, befindende Führungsbuchse sorgt für eine axiale Führung beim Herausfahren des Gewindetriebs. Die erzeugte Hub- und Drehbewegung wird zusätzlich mit einem Wälzlager, vorzugsweise einem unteren und oberen Lager, gestützt.

Der Generator zur Stromerzeugung besitzt je nach Ausführung eine Leistung von 100 bis 1500 W, und befindet sich in einer besonderen Ausführungsform oberhalb des Gewindetriebs und unterhalb der Rotoreinheit.

Bei einer nicht ausreichenden Ausfahrhöhe der Rotorblätter lassen sich diese in einer weiteren Ausführungsform in Form von Verlängerungswellen mittels einer formschlüssigen Arretierung und kraftschlüssigen Klemmen unter der Hauptwelle auf eine individuelle Aushubhöhe einstellen.

In dem genannten Gehäuse ist eine Öffnungsklappe angebracht, worin sich die Kurbel, die Rotorblätter zur Montage an der Hubwelle und die Verlängerungsstangen befinden.

Man kann vertikale oder horizontale Rotoreinheiten verwenden.

Sobald die Rotorblätter sicher ausgefahren sind, lassen sich diese mittels eines Entriegelungstasters bei vorhandenem Wind starten. Damit wird gewährleistet, dass die Rotorblätter bei vorhandenem Wind während des Hochfahrens nicht drehen.

Werden die Rotorblätter mittels Wind angetrieben, wird die dabei entstandene Drehbewegung über die ausgefahrene Welle an einen im oder außerhalb des Gehäuses sich befindenden Generator übertragen. Der Generator erzeugt Strom und leitet diesen an die Bordspannung, dem Akku usw. weiter.

Ein Drehzahlsensor überwacht dabei die Drehzahl der Rotorblätter. Wird die für die Anlage vorgesehene Windgeschwindigkeit überschritten, wird dies erkannt und die Anlage gestoppt.

Die erfindungsgemäße Rotoreinheit und die Steuerungseinheit werden vor dem Anbringen am Fahrzeug zusammengesteckt und mittels einer Halterung am Fahrzeug befestigt.

### Zeichnungen

Figur 1 zeigt die gesamte erfindungsgemäße Windkraftanlage in der Draufsicht ohne Halterungseinheit.
Figur 2 zeigt die Seitenansicht der erfindungsgemäßen Windkraftanlage ohne Designgehäuse.
Figur 3 zeigt die Seitenansicht der erfindungsgemäßen Windkraftanlage mit Designgehäuse.
Figur 4 zeigt die Seitenansicht der erfindungsgemäßen Windkraftanlage, befestigt auf einem Fahrzeug.
Figur 5 zeigt die Draufsicht der erfindungsgemäßen Windkraftanlage, befestigt am Heck eines Fahrzeugs.
Figur 6 zeigt die zu Figur 5 gehörende Ansicht der erfindungsgemäßen Windkraftanlage, vom Dach des Fahrzeugs aus gesehen.
Figur 7 zeigt die Draufsicht auf die erfindungsgemäße Windkraftanlage, befestigt auf dem Dach eines Fahrzeugs.

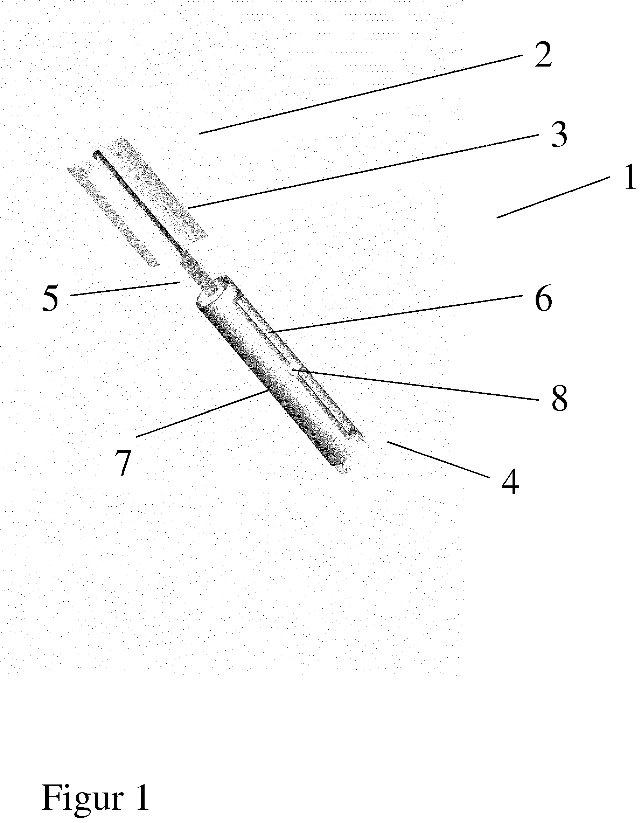

In Figur 1 wird die gesamte erfindungsgemäße Windkraftanlage 1 in der Draufsicht gezeigt, ohne die Halterungseinheit. Zu sehen ist die Rotoreinheit 2 mit den Rotorblättern 3, welche über die Trapezgewindestange 5 mit der Steuerungseinheit 4 verbunden ist, welche ein Designgehäuse 7 besitzt. Im Designgehäuse 7 ist die Führungsbuchse 6 mit dem Hubknauf 8 integriert.

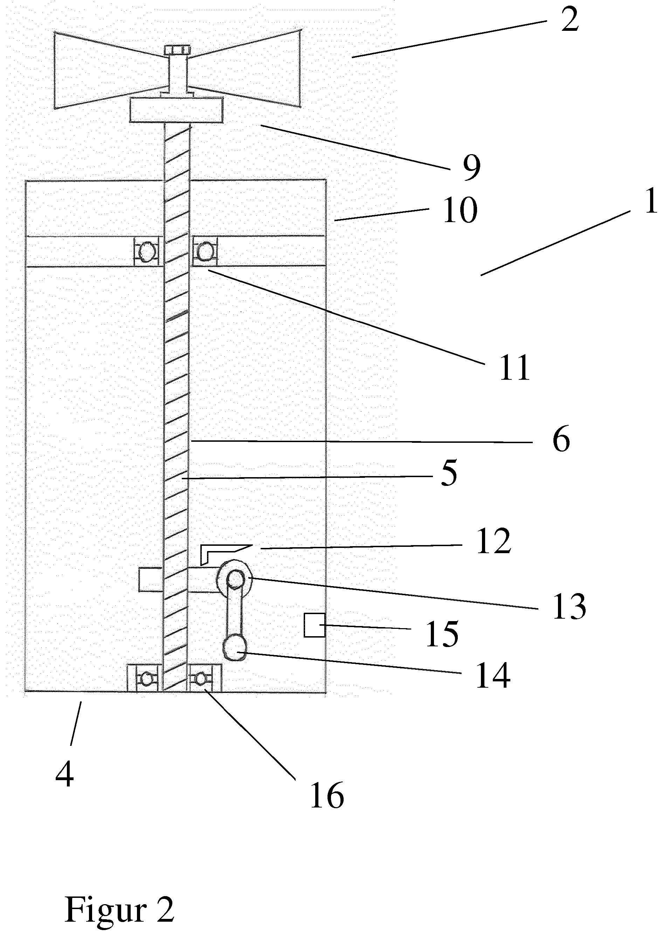

In Figur 2 wird die erfindungsgemäße Windkraftanlage 1 mit der Rotoreinheit 2 und der Steuerungseinheit 4. Die Steuerungseinheit besteht aus dem Generator 9, welcher sich in dieser besonderen Ausführungsform außerhalb des Aluminiumgehäuses 10 oberhalb des Gewindetriebs und unterhalb der Rotoreinheit 2 befindet.

Die folgenden Bestandteile befinden sich im Aluminiumgehäuse 10:
Mit dem Hebel 12 bzw. der Handkurbel 14 lassen sich die Rotorblätter 3 mittels der Trapezgewindestange 5 in Kombination mit einem Schneckenantrieb 13 durch die Bewegung des Hebel 12 bzw. der Kurbel 14 hochfahren. Die sich im Gehäuse befindende Führungsbuchse 6 sorgt für eine axiale Führung beim Herausfahren des Gewindetriebs. Die erzeugte Hub- und Drehbewegung wird zusätzlich mittels eines unteren Lagers 16 und eines oberen Lagers 11 gestützt.

Diese Figur zeigt auch eine Steckdose 15.

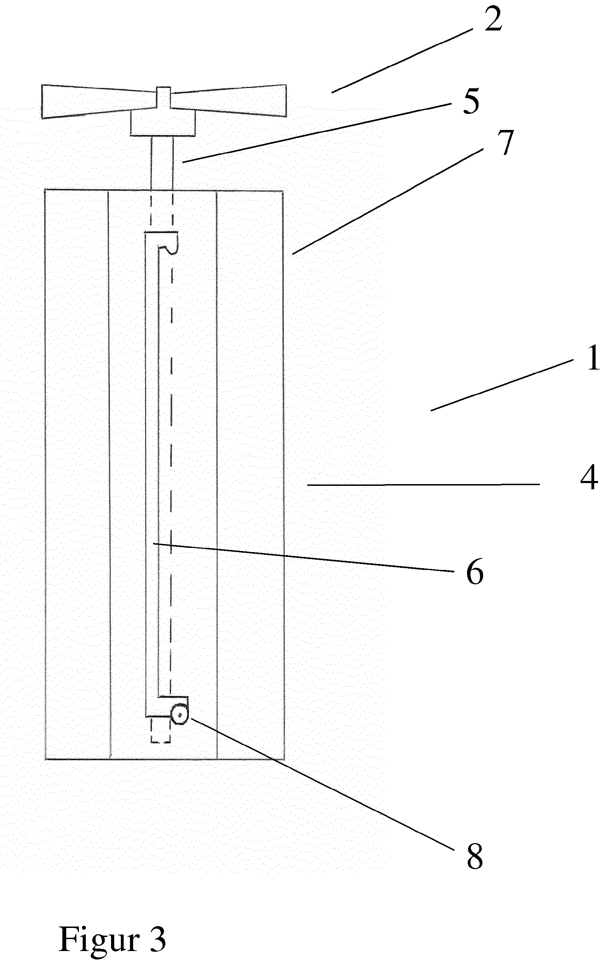

In Figur 3 ist die erfindungsgemäße Windkraftanlage 1 in der Seitenansicht zu sehen, wobei in dieser besonderen Ausführungsform der Erfindung die Rotoreinheit 2 sowie die Steuerungseinheit 4 zu sehen sind, welche sich im Designgehäuse 7 befinden. Zu sehen ist auch die Trapezgewindestange 5. Im Designgehäuse 7 integriert sind die Führungsbuchse 6 und der Hubknauf 8.

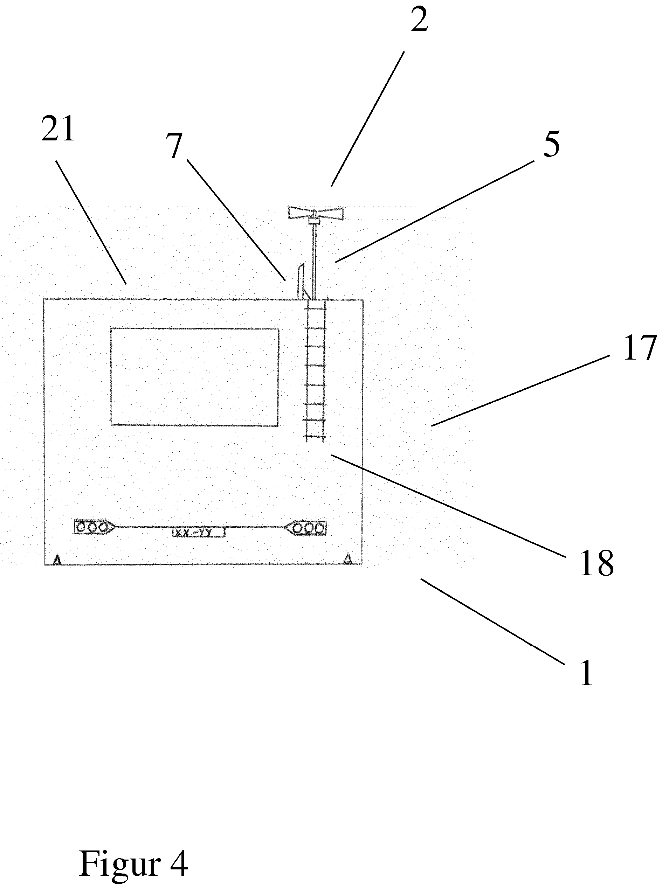

In Figur 4 ist die erfindungsgemäße Windkraftanlage 1 auf dem Dach eines Fahrzeugs 21 zu sehen. Gezeigt wird ebenfalls das Designgehäuse 7 (angedeutet), die Gewindestange 5 sowie die Rotoreinheit 2. Diese Ansicht zeigt auch das Heck eines Fahrzeugs 17, beispielsweise eines Wohnwagens, mit einer Leiter 18 auf der rechten Seite.

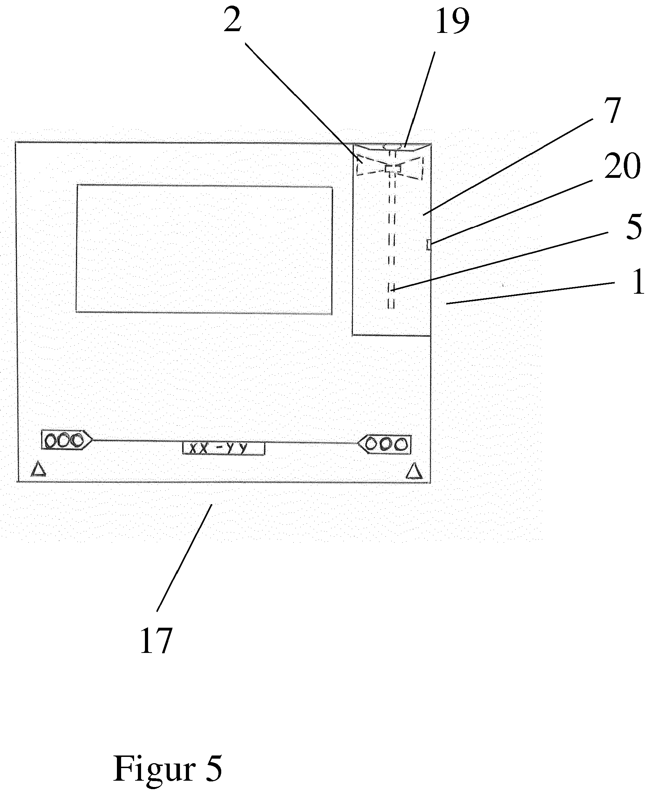

In Figur 5 wird das Heck eines Fahrzeugs 17, beispielsweise eines Wohnwagens, gezeigt. Am Heck ist die erfindungsgemäße Windkraftanlage 1 befestigt. Gezeigt wird das Designgehäuse 7, außerdem die Öffnungsklappe für die Handkurbel 20 und der Magnetdeckel 19.

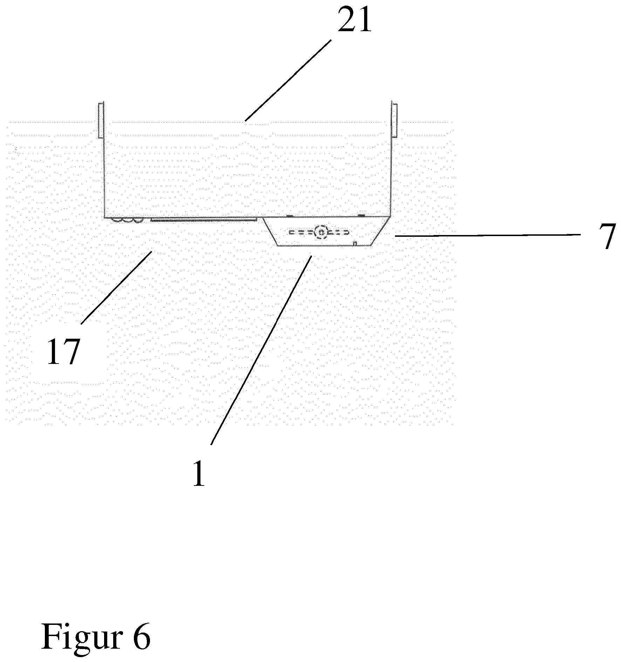

In Figur 6 wird ebenfalls die erfindungsgemäße Windkraftanlage 1 gezeigt, welche am Heck des Fahrzeugs 17 befestigt ist. Die Ansicht ist vom Dach des Fahrzeugs 21. Zu sehen ist bei dieser Ansicht auch das Designgehäuse 7.

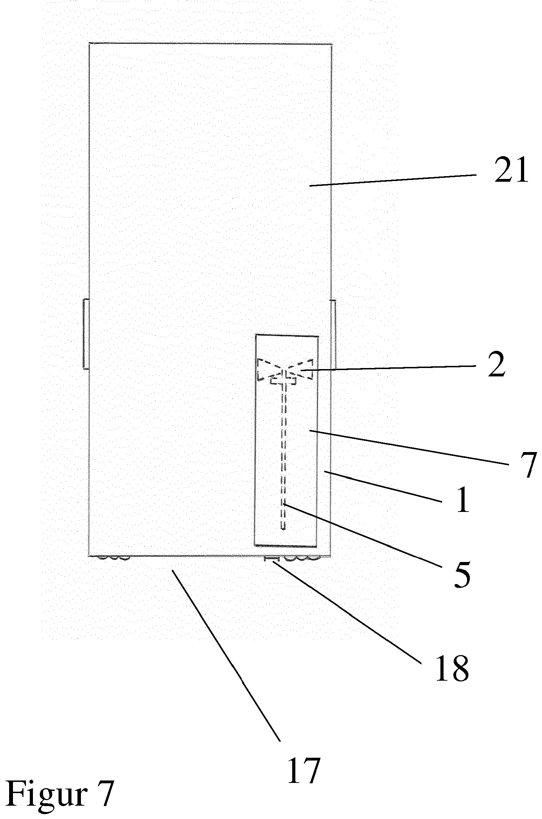

In Figur 7 wird das Dach eines Fahrzeugs 21 gezeigt, auf dem sich die erfindungsgemäße Windkraftanlage 1 befindet. Dabei befindet sich die Rotoreinheit 2 und die Trapezgewindestange 5 im Designgehäuse 7. Vom Fahrzeug ist auch das Heck 17 und eine Leiter 18 zu sehen.

### Bezeichnungsliste

| | |
|---|---|
| Windkraftanlage | 1 |
| Rotoreinheit | 2 |
| Rotorblätter | 3 |
| Steuerungseinheit | 4 |
| Trapezgewindestange | 5 |
| Führungsbuchse | 6 |
| Designgehäuse | 7 |
| Hubknauf | 8 |
| Generator | 9 |
| Aluminiumgehäuse | 10 |
| Oberes Lager | 11 |
| Hebel | 12 |
| Schneckenantrieb | 13 |
| Handkurbel | 14 |
| Steckdose | 15 |
| Unteres Lager | 16 |
| Heck eines Fahrzeugs | 17 |
| Leiter | 18 |
| Magnetdeckel | 19 |
| Öffnungsklappe für Kurbel | 20 |
| Dach eines Fahrzeugs | 21 |

Mittels der erfindungsgemäßen Windkraftanlage ist es gelungen, eine elegante und preisgünstige Lösung zur Gewinnung von Strom mittels Windkraft für Fahrzeuge zur Verfügung zu stellen.

## Patentansprüche

1. Windkraftanlage für Fahrzeuge (1), aus einem Bausatz aus einer Rotoreinheit (2), einer Steuerungseinheit (4) und einer Halterungseinheit bestehend, **dadurch gekennzeichnet, dass** die Rotoreinheit (2) mit der Steuerungseinheit (4) über eine Trapezgewindestange (5) verbunden ist.

2. Windkraftanlage für Fahrzeuge (1) gemäß Anspruch 1, **dadurch gekennzeichnet, dass** die Steuerungseinheit (4) ein Gehäuse (10) besitzt, welches von einem Designgehäuse (7) umschlossen ist.

3. Windkraftanlage für Fahrzeuge (1) gemäß Anspruch 1 und/oder 2, **dadurch gekennzeichnet, dass** sich ein Generator (9) innerhalb oder außerhalb der Steuerungseinheit (4) befindet.

4. Windkraftanlage für Fahrzeuge (1) gemäß einem und/oder mehreren der Ansprüche 1 bis 3, **dadurch gekennzeichnet, dass** die Rotoreinheit (2) über die Trapezgewindestange (5) mittels einer Handkurbel (14) oder eines Hubknaufs (8) über eine Führungsbuchse (6) aus- und eingefahren werden kann.

5. Windkraftanlage für Fahrzeuge (1) gemäß einem und/oder mehreren der Ansprüche 1 bis 4, **dadurch gekennzeichnet, dass** die Rotoreinheit (2) elektrisch aus- und eingefahren werden kann.

6. Windkraftanlage für Fahrzeuge (1) gemäß einem und/oder mehreren der Ansprüche 1 bis 5, **dadurch gekennzeichnet, dass** die Hub- und Drehbewegung durch die Trapezgewindestange (5) mittels eines Wälzlagers gestützt wird.

7. Windkraftanlage für Fahrzeuge (1) gemäß einem und/oder mehreren der Ansprüche 1 bis 6, **dadurch gekennzeichnet, dass** die Rotoreinheit (2) mittels eines Hebels (12) arretiert werden kann.

## Claims

1. Wind turbine for vehicles (1), consists of a kit of a rotor unit (2), a control unit (4) and a mounting unit **characterized in that** the rotor unit (2) is connected to the control unit (4) via a trapezoidal thread (5).

2. Wind turbine for vehicles (1) according to Claims 1, **characterized in that** the control unit (4) has a housing (10) which is enclosed by a designer housing (7).

3. Wind turbine for vehicles (1) according to Claim 1 and/or 2, **characterized in that** a generator (9) is located inside or outside the control unit (4).

4. Wind turbine for vehicles (1) according to one and/or more of Claims 1 to 3, **characterized in that** the rotor unit (2) is lifted via the trapezoidal threaded rod (5) by means of a hand crank (14) or a lifting knob (8) via a guide bush (6) can be extended and retracted.

5. Wind turbine for vehicles (1) according to one and/or more of Claims 1 to 4, **characterized in that** the rotor unit (2) can be extended and retracted electrically.

6. Wind turbine for vehicles (1) according to one and/or more of Claims 1 to 5, **characterized in that** the lifting and rotating movement is supported by the trapezoidal threaded rod (5) by means of a roller bearing.

7. Wind turbine for vehicles (1) according to one and/or more of Claims 1 to 6, **characterized in that** the rotor unit (2) can be locked by means of a lever (12).

## Revendications

1. Eolienne pour véhicules (1), consiste en un kit se compose d'une unité de rotor (2), d'une unité de commande (4) et d'une unité de montage, **caractérisée en ce que** l'unité de rotor (2) est reliée à l'unité de commande (4) par un filetage trapézoïdal (5).

2. Eolienne pour véhicules (1) selon la revendication 1, **caractérisée en ce que** l'unité de commande (4) présente un boîtier (10) qui est entouré d'un boîtier de conception (7).

3. Eolienne pour véhicules (1) selon la revendication 1 et/ou 2, **caractérisée en ce qu'** un générateur (9) est situé à l'intérieur ou à l'extérieur de l'unité de commande (4).

4. Eolienne pour véhicules (1) selon une et/ou plusieurs des revendications 1 à 3, **caractérisée en ce que** l'unité de rotor (2) est soulevée via la tige filetée trapézoïdale (5) au moyen d'une manivelle (14) ou un bouton de levage (8) par l'intermédiaire d'une douille de guidage (6) peut être sorti et rentré.

5. Eolienne pour véhicules (1) selon l'une et/ou plusieurs des 4, **caractérisée en ce que** l'unité de rotor (2) peut être déployée et rétractée électriquement.

6. Eolienne pour véhicules (1) selon une et/ou plusieurs des revendications 1 à 5, **caractérisée en ce que** le mouvement de levage et de rotation est supporté par la tige filetée trapézoïdale (5) au moyen d'un roulement à rouleaux.

7. Eolienne pour véhicules (1) selon une et/ou plusieurs des revendications 1 à 6, **caractérisée en ce que** l'unité de rotor (2) peut être verrouillée au moyen d'un levier (12).
